# EUROPEAN PATENT APPLICATION

(11) **EP 4 804 289 A2**
(43) Date of publication of application: **09.09.2026**
(21) Application number: 26159247.1
(22) Date of filing: 18.02.2026
(51) Int. Cl.: H01M 10/48

(54) **BATTERY PACK AND BATTERY MANAGEMENT SYSTEM INCLUDING THE SAME**

(30) Priority: 04.03.2025 KR 20250027551
(71) Applicant: SAMSUNG SDI CO., LTD., Yongin-si, Gyeonggi-do 17084 (KR)
(72) Inventor: Ko, Seokbeom, Yongin-si, Gyeonggi-do 17084 (KR)
(74) Representative: Meissner Bolte Partnerschaft mbB

(57) **Abstract**

A battery management system (400) includes a battery pack (300) includes a plurality of battery modules (340), and a plurality of battery-management modules (410) respectively corresponding to the plurality of battery modules (340), wherein each of the plurality of battery modules (340) includes a first set of temperature sensors (11, 13) disposed at a first position (341) of the battery module (340), and a second set of temperature sensors (21, 23) disposed at a second position (343) of the battery module (340) different from the first position (341), and wherein each of the plurality of battery-management modules (410) includes a first analog front end (413a) connected to at least one temperature sensor of the first set of temperature sensors (11, 13), and a second analog front end (413b) connected to at least one temperature sensor of the second set of temperature sensors (21, 23).

## Description

### FIELD

Various embodiments of the present invention relate to a battery pack and a battery management system including the same.

### BACKGROUND

As various types of mobility devices driven by electrical energy have been commercialized, technologies for improving the safety of the battery pack that forms the core basis thereof have been proposed. For example, in order to prevent in advance safety accidents such as thermal runaway of a battery pack and ignition or explosion linked thereto, a battery management system that monitors overheating of the battery pack based on a temperature sensor disposed in the battery pack is mounted in the mobility device. However, when an abnormal state occurs in the temperature sensor disposed in the battery pack and/or in an analog front end that converts a signal output from the temperature sensor, monitoring of the battery pack may be degraded, leading to a safety risk.

The herein information disclosed in this Background section is for enhancement of understanding of the background of the present invention, and therefore, it may contain information that does not constitute related (or prior) art.

### SUMMARY

The present invention provides a battery pack and a battery management system including the same to solve the herein-described problem.

However, the technical problem to be solved by the present invention is not limited to problems described herein, and other problems not mentioned herein, and aspects and features of the present invention that would address such problems, will be clearly understood by those skilled in the art from the description of the present invention herein.

A battery management system according to the present invention includes a battery pack may include a plurality of battery modules, and a plurality of battery-management modules respectively corresponding to the plurality of battery modules, wherein each of the plurality of battery modules may include a first set of temperature sensors disposed at a first position of the battery module, and a second set of temperature sensors disposed at a second position of the battery module different from the first position, and wherein each of the plurality of battery-management modules may include a first analog front end connected to at least one temperature sensor of the first set of temperature sensors, and a second analog front end connected to at least one temperature sensor of the second set of temperature sensors.

In some embodiments, the first set of temperature sensors may include a first temperature sensor and a second temperature sensor, the second set of temperature sensors may include a third temperature sensor and a fourth temperature sensor, the first analog front end may be connected to the first temperature sensor and the second temperature sensor, and the second analog front end may be connected to the third temperature sensor and the fourth temperature sensor.

In some embodiments, the first temperature sensor and the third temperature sensor may include a first attribute, and the second temperature sensor and the fourth temperature sensor may include a second attribute different from the first attribute.

In some embodiments, each of the plurality of battery-management modules further may include a microcontroller unit connected to the first analog front end and the second analog front end.

In some embodiments, the microcontroller unit may be configured to acquire a first signal related to the first temperature sensor and a second signal related to the second temperature sensor from the first analog front end, acquire a third signal related to the third temperature sensor and a fourth signal related to the fourth temperature sensor from the second analog front end, and determine overheating of a battery module based on at least one of the first signal, the second signal, the third signal, or the fourth signal.

In some embodiments, the battery management system may further include a battery-management master module connected to the plurality of battery-management modules, wherein the microcontroller unit is configured to provide information related to an abnormal state of the battery module to the battery-management master module based on a determination that a temperature value indicated by at least one of the first signal, the second signal, the third signal, or the fourth signal is greater than a predetermined threshold.

In some embodiments, the microcontroller unit may be configured to calculate an absolute value of a difference between a first temperature value indicated by the first signal and a second temperature value indicated by the second signal, calculate a sum of a first tolerance value of the first temperature sensor and a second tolerance value of the second temperature sensor, and determine that the absolute value is less than or equal to the sum, based on which the microcontroller unit is configured to use the first signal and the second signal to assess overheating of the battery module.

In some embodiments, the battery management system may further include a battery-management master module connected to the plurality of battery-management modules, wherein the microcontroller unit is configured to provide information related to an abnormal state of either the first temperature sensor or the second temperature sensor, corresponding to a greater temperature value among the first temperature value and the second temperature value, to the battery-management master module, based on a determination that the absolute value is greater than the sum value.

In some embodiments, the microcontroller unit may be configured to calculate an absolute value of a difference between a third temperature value indicated by the third signal and a fourth temperature value indicated by the fourth signal, calculate a sum of a third tolerance value of the third temperature sensor and a fourth tolerance value of the fourth temperature sensor, and determine that the absolute value is less than or equal to the sum, based on which the microcontroller unit is configured to use the third signal and the fourth signal to assess overheating of the battery module.

In some embodiments, the battery management system may further include a battery-management master module connected to the plurality of battery-management modules, wherein the microcontroller unit is configured to provide information related to an abnormal state of either the third temperature sensor or the fourth temperature sensor, corresponding to a greater temperature value among the third temperature value and the fourth temperature value, to the battery-management master module, based on a determination that the absolute value is greater than the sum value.

In some embodiments, the first set of temperature sensors may include a first temperature sensor and a second temperature sensor, the second set of temperature sensors may include a third temperature sensor and a fourth temperature sensor, the first analog front end is connected to the second temperature sensor and the third temperature sensor, and the second analog front end is connected to the first temperature sensor and the fourth temperature sensor.

In some embodiments, the first temperature sensor and the third temperature sensor may include a first attribute, and the second temperature sensor and the fourth temperature sensor may include a second attribute different from the first attribute.

In some embodiments, each of the plurality of battery-management modules may further include a microcontroller unit connected to the first analog front end and the second analog front end.

In some embodiments, the microcontroller unit may be configured to acquire a second signal related to the second temperature sensor and a third signal related to the third temperature sensor from the first analog front end, acquire a first signal related to the first temperature sensor and a fourth signal related to the fourth temperature sensor from the second analog front end, and determine overheating of a battery module based on at least one of the first signal, the second signal, the third signal, or the fourth signal.

In some embodiments, the battery management system may further include a battery-management master module connected to the plurality of battery-management modules, wherein the microcontroller unit is configured to provide information related to an abnormal state of the battery module to the battery-management master module based on a determination that a temperature value indicated by at least one of the first signal, the second signal, the third signal, or the fourth signal is greater than a predetermined threshold.

A battery pack according to the present invention includes a plurality of battery modules, wherein each of the plurality of battery modules includes a first set of temperature sensors disposed at a first position of the battery module, and a second set of temperature sensors disposed at a second position of the battery module different from the first position, wherein at least one temperature sensor of the first set of temperature sensors forms a signal path with a first analog front end disposed outside the battery pack, and wherein at least one temperature sensor of the second set of temperature sensors forms a signal path with a second analog front end disposed outside the battery pack.

In some embodiments, the first set of temperature sensors may include a first temperature sensor that forms a first signal path with the first analog front end and a second temperature sensor that forms a second signal path with the first analog front end, and the second set of temperature sensors may include a third temperature sensor that forms a third signal path with the second analog front end and a fourth temperature sensor that forms a fourth signal path with the second analog front end.

In some embodiments, the first temperature sensor and the third temperature sensor may include a first attribute, and the second temperature sensor and the fourth temperature sensor may include a second attribute different from the first attribute.

In some embodiments, the first set of temperature sensors may include a first temperature sensor that forms a first signal path with the second analog front end and a second temperature sensor that forms a second signal path with the first analog front end, and the second set of temperature sensors may include a third temperature sensor that forms a third signal path with the first analog front end and a fourth temperature sensor that forms a fourth signal path with the second analog front end.

In some embodiments, the first temperature sensor and the third temperature sensor may include a first attribute, and the second temperature sensor and the fourth temperature sensor may include a second attribute different from the first attribute.

According to various embodiments of the present invention, by disposing a plurality of temperature sensors at a specific position of a battery pack, a mechanism is provided that enables temperature monitoring of the position by using another temperature sensor even when an abnormal state occurs in some temperature sensors.

According to various embodiments of the present invention, by connecting a plurality of temperature sensors disposed at a specific position of the battery pack to different analog front ends of a battery management system, a mechanism is provided that enables temperature monitoring of the position by using another analog front end even when an abnormal state occurs in some analog front ends.

According to various embodiments of the present invention, by disposing a plurality of temperature sensors having different attributes (e.g., manufacturer, specification, model, and/or operating voltage) at a specific position of the battery pack, a mechanism is provided that enables temperature monitoring of the position by using another temperature sensor having a different attribute even in various contexts (or environments) that affect temperature sensors of a specific attribute.

However, aspects and features of the present invention are not limited to those described herein, and other aspects and features not mentioned will be clearly understood by a person skilled in the art from the detailed description, described herein.

### BRIEF DESCRIPTION OF THE DRAWINGS

The following drawings attached to this specification illustrate embodiments of the present invention, and further describe aspects and features of the present invention together with the detailed description of the present invention. Thus, the present invention should not be construed as being limited to the drawings:
FIG. 1 illustrates a vehicle body including a battery pack according to embodiments of the present invention.
FIG. 2 illustrates a vehicle including a battery pack according to embodiments of the present invention.
FIG. 3 illustrates a housing of a battery pack according to embodiments of the present invention.
FIG. 4 illustrates a battery pack including a plurality of battery modules according to embodiments of the present invention.
FIG. 5 illustrates a battery management system according to embodiments of the present invention.
FIG. 6 illustrates a battery-management module according to embodiments of the present invention.
FIG. 7 illustrates an example of connections between a plurality of temperature sensors of a battery module and a plurality of analog front ends of a battery-management module according to embodiments of the present invention.
FIG. 8 illustrates another example of connections between a plurality of temperature sensors of a battery module and a plurality of analog front ends of a battery-management module according to embodiments of the present invention.
FIG. 9 illustrates, by way of example, safety-assessment results of a vehicle based on a battery management system according to embodiments of the present invention.

### DETAILED DESCRIPTION

Hereinafter, embodiments of the present invention will be described, in detail, with reference to the accompanying drawings. The terms or words used in this specification and claims should not be construed as being limited to the usual or dictionary meaning and should be interpreted as meaning and concept consistent with the technical idea of the present invention based on the principle that the inventor can be his/her own lexicographer to appropriately define the concept of the term to explain his/her invention in the best way. The embodiments described in this specification and the configurations shown in the drawings are only some of the embodiments of the present invention and do not represent all of the technical ideas, aspects, and features of the present invention. Accordingly, it should be understood that there may be various equivalents and modifications that can replace or modify the embodiments described herein at the time of filing this application.

It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

In the figures, dimensions of the various elements, layers, etc. may be exaggerated for clarity of illustration. The same reference numerals designate the same elements.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

It will be understood that, although the terms first, second, etc. may be used herein to describe various elements, these elements should not be limited by these terms. These terms are used to distinguish one element from another element. Thus, a first element discussed herein could be termed a second element without departing from the teachings of example embodiments.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present invention and is not intended to be limiting of the present invention.

The terms "module" or "unit" used in the present specification may mean software and/or hardware components. According to embodiments, the "module" or "unit" can be implemented by a processor and a memory. A "processor" should be broadly interpreted to include a general-purpose processor, a central processing unit (CPU), a microprocessor, a digital signal processor (DSP), a controller, a microcontroller, a state machine, and the like. In some environments, a "processor" may refer to an applicationspecific integrated circuit (ASIC), a programmable logic device (PLD), a fieldprogrammable gate array (FPGA), and the like. In addition, the "processor" may refer to a combination of processing devices such as a combination of a DSP and a microprocessor, a combination of multiple microprocessors, a combination of one or more microprocessors coupled with a DSP core, or other such combinations. The term "memory" should be broadly interpreted to include any electronic component that can store electronic information. The "memory" may refer to various types of processorreadable media such as random-access memory (RAM), read-only memory (ROM), nonvolatile RAM (NVRAM), programmable ROM (PROM), erasable-programmable ROM (EPROM), electrically erasable PROM (EEPROM), flash memory, magnetic or optical data storage devices, registers, and the like. If a processor can read information from or write information to a memory, the memory is said to be in electronic communication with the processor. A memory integrated into a processor is in electronic communication with the processor.

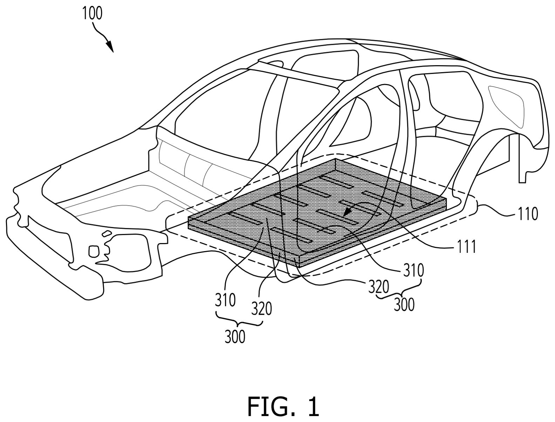

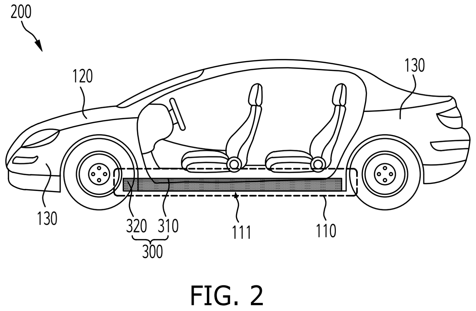

FIG. 1 illustrates a vehicle body including a battery pack according to embodiments of the present invention. FIG. 2 illustrates a vehicle including a battery pack according to embodiments of the present invention.

Referring to FIGS. 1 and 2, a battery pack 300 according to embodiments may be mounted in a vehicle 200 that can be driven based on electrical energy. In various embodiments, the vehicle 200 may include a four-wheel or two-wheel electric vehicle, a hybrid vehicle, or a plug-in hybrid vehicle.

A battery pack 300 may include a battery pack cover 310, which is a part of a vehicle underbody 111, and a pack frame 320 disposed under the vehicle underbody 111. The vehicle underbody 111 separates the inside and outside of a vehicle 200, and the pack frame 320 may be disposed outside the vehicle 200. The pack frame 320 and the battery pack cover 310 may be integrally formed with a vehicle 200 floor 110. The vehicle 200 may be formed by combining additional parts, such as a hood 120 in front of the vehicle 200 and fenders 130 respectively located in the front and rear of the vehicle 200 to a vehicle body 100.

Although not shown, a vehicle 200 may further include a battery management system that monitors a temperature of the battery pack 300 to manage overheating of the battery pack 300.

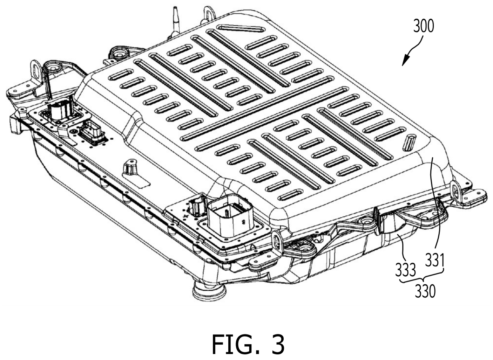

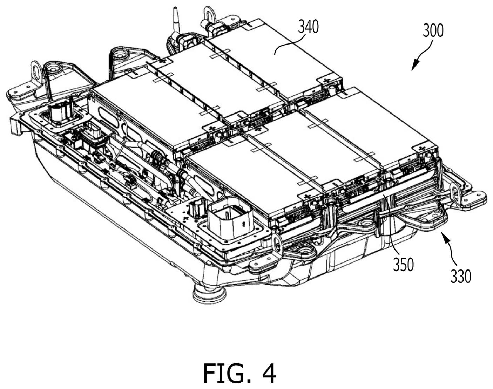

FIG. 3 illustrates a housing of a battery pack according to embodiments of the present invention. FIG. 4 illustrates a battery pack including a plurality of battery modules according to embodiments of the present invention.

Referring to FIGS. 3 and 4, the battery pack 300 may include a plurality of battery modules 340 and a housing 330 for accommodating the plurality of battery modules 340. For example, the housing 330 may include first and second housings 331 and 333 coupled in opposite directions through the plurality of battery modules 340.

The plurality of battery modules 340 may be electrically connected to each other by using a bus bar 350, and the plurality of battery modules 340 may be electrically connected to each other in a series/parallel or series-parallel mixed method, thereby obtaining desired (e.g., required) electrical output.

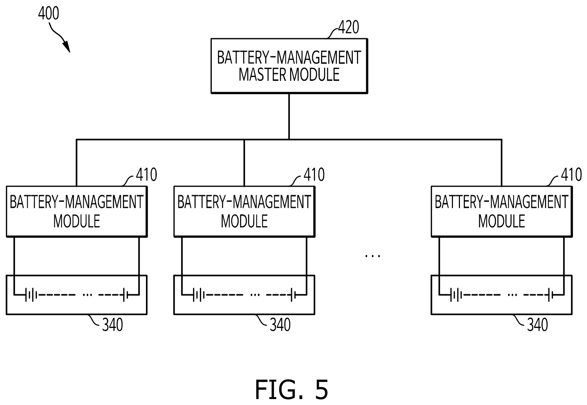

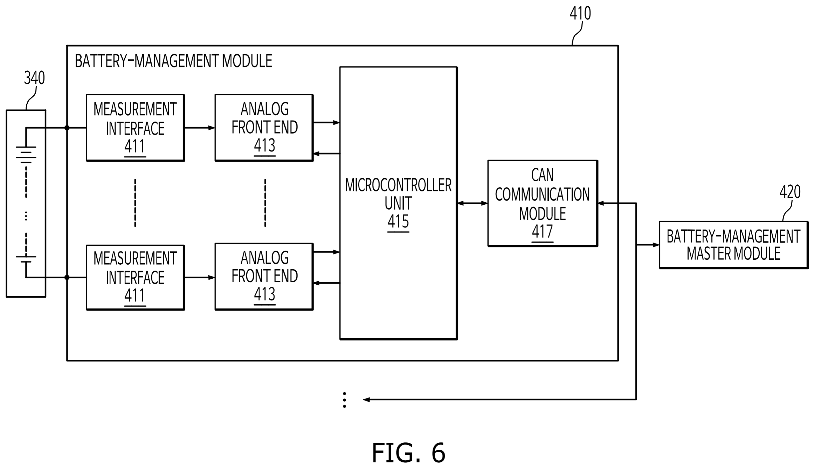

FIG. 5 illustrates a battery management system according to embodiments of the present invention. FIG. 6 illustrates a battery-management module according to embodiments of the present invention.

Referring to FIGS. 5 and 6, a battery management system 400 according to embodiments may be configured to monitor a state of each of the plurality of battery modules 340 constituting the battery pack 300 (e.g., the battery pack 300 of FIGS. 1-4). Accordingly, the battery management system 400 may include a plurality of battery-management modules 410 respectively corresponding to the plurality of battery modules 340 and a battery-management master module 420 connected to the plurality of battery-management modules 410.

In embodiments, each of the plurality of battery-management modules 410 may be connected to a corresponding battery module 340 and configured to monitor a state of the battery module 340, for example, a temperature state. In embodiments, the plurality of battery-management modules 410 may be connected to the battery-management master module 420 through a communication line (e.g., a CAN communication line) and may provide (or transmit) state information of the monitored battery module 340 to the battery-management master module 420. For example, each of the plurality of battery-management modules 410 may provide, according to a monitoring cycle, temperature information of the corresponding battery module 340 and/or information (or a warning signal) on an abnormal state (e.g., overheating) of the battery module 340 to the battery-management master module 420. In various embodiments, the battery-management master module 420 may log temperature information of each of the plurality of battery modules 340 that is provided (or received) from the plurality of battery-management modules 410.

In embodiments, each of the plurality of battery-management modules 410 may include a plurality of measurement interfaces 441, a plurality of analog front ends 413, a microcontroller unit 415, and a CAN communication module 417. According to various embodiments, each of the plurality of battery-management modules 410 may omit at least some of the unillustrated, herein-described components or may further include at least one additional component.

In embodiments, each of the plurality of measurement interfaces 441 may connect each of the plurality of temperature sensors, which are disposed at various positions of the battery module 340 to sense a temperature of the battery module 340, to a corresponding analog front end 413. For example, the measurement interface 441 may include a connector that supports a connection between a temperature sensor disposed at a specific position of the battery module 340 and a corresponding analog front end 413.

In embodiments, each of the plurality of analog front ends 413 may include an integrated circuit specialized for analog-signal processing. For example, each of the plurality of analog front ends 413 may receive, through the corresponding measurement interface 411, an analog signal output from a temperature sensor connected to the measurement interface 411 and convert the analog signal into a digital signal that can be processed by the microcontroller unit 415. In embodiments, each of the plurality of analog front ends 413 may convert analog signals of temperature sensors into digital signals and provide (or transmit) the digital signals to the microcontroller unit 415.

In embodiments, the microcontroller unit 415 may monitor a temperature state of the battery module 340 based on digital signals received from the plurality of analog front ends 413. For example, the microcontroller unit 415 may determine whether the battery module 340 is overheated by comparing a temperature value indicated by each digital signal with a predetermined threshold. For instance, when the microcontroller unit 415 determines that a temperature value indicated by a specific digital signal is greater than the threshold, the microcontroller unit 415 may determine that overheating occurs at the position where the temperature sensor that outputs an analog signal related to the digital signal is disposed in the battery module 340. In embodiments, when overheating of the battery module 340 is determined, the microcontroller unit 415 may provide (or transmit) information (or a warning signal) on an abnormal state of the battery module 340 to the battery-management master module 420 by using the CAN communication module 417 that supports communication with the battery-management master module 420.

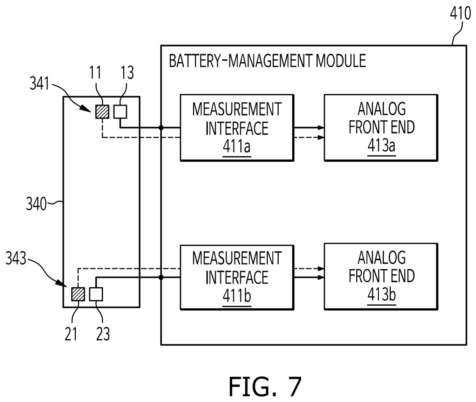

FIG. 7 illustrates an example of connections between a plurality of temperature sensors of a battery module and a plurality of analog front ends of a battery-management module according to embodiments of the present invention.

Referring to FIG. 7, a battery module 340 according to embodiments may include a plurality of temperature sensors. For example, the battery module 340 may include a first set of temperature sensors 11 and 13 and a second set of temperature sensors 21 and 23. According to embodiments, the first set of temperature sensors 11 and 13 may be disposed at a first position 341 of the battery module 340, and the second set of temperature sensors 21 and 23 may be disposed at a second position 343 of the battery module 340 that is different from the first position 341. In various embodiments, as long as the first position 341 and the second position 343 are different positions in the battery module 340, the positions are not limited and may be determined to various positions.

In embodiments, the first set of temperature sensors 11 and 13 may include a first temperature sensor 11 and a second temperature sensor 13. According to various embodiments, the first temperature sensor 11 and the second temperature sensor 13 may be disposed adjacent to each other at substantially the same first position 341 in the battery module 340 or may be aligned in a stacking direction (or Z-axis direction) and disposed at the same first position 341.

In embodiments, the second set of temperature sensors 21 and 23 may include a third temperature sensor 21 and a fourth temperature sensor 23. In embodiments, the third temperature sensor 21 and the fourth temperature sensor 23 may be disposed adjacent to each other at substantially the same second position 343 in the battery module 340 or may be aligned in a stacking direction and disposed at the same second position 343.

According to various embodiments, at least one of the first temperature sensor 11, the second temperature sensor 13, the third temperature sensor 21, or the fourth temperature sensor 23 may include at least one of an NTC (negative-temperature-coefficient) thermistor, a PTC (positive-temperature-coefficient) thermistor, an RTD (resistance-temperature detector), or a thermocouple.

According to embodiments, the first temperature sensor 11 and the second temperature sensor 13 constituting the first set of temperature sensors 11 and 13 may include different attributes from each other. For example, the first temperature sensor 11 may include a first attribute, and the second temperature sensor 13 may include a second attribute different from the first attribute. According to various embodiments, the attribute of a temperature sensor may include at least one of manufacturer information, model information, specification information, and/or driving-voltage information of the temperature sensor. Similarly, the third temperature sensor 21 and the fourth temperature sensor 23 constituting the second set of temperature sensors 21 and 23 may include different attributes from each other. For example, the third temperature sensor 21 may include a third attribute, and the fourth temperature sensor 23 may include a fourth attribute. According to various embodiments, the first attribute of the first temperature sensor 11 and the third attribute of the third temperature sensor 21 may be the same or different, and the second attribute of the second temperature sensor 13 and the fourth attribute of the fourth temperature sensor 23 may be the same or different.

In embodiments, at least one temperature sensor of the first set of temperature sensors 11 and 13 may be connected to a first analog front end 413a of the battery-management module 410. For example, the first temperature sensor 11 and the second temperature sensor 13 constituting the first set of temperature sensors 11 and 13 may each be connected to the first analog front end 413a through a first measurement interface 411a. In various embodiments, connecting a temperature sensor to an analog front end may be interpreted as forming a signal-transmission path between the temperature sensor and the analog front end through a measurement interface.

In embodiments, at least one temperature sensor of the second set of temperature sensors 21 and 23 may be connected to a second analog front end 413b of the battery-management module 410. For example, the third temperature sensor 21 and the fourth temperature sensor 23 constituting the second set of temperature sensors 21 and 23 may each be connected to the second analog front end 413b through a second measurement interface 411b.

According to the embodiment of FIG. 7, because a plurality of temperature sensors disposed at a specific position of the battery module 340 form a set, the temperature of the battery module 340 at the position can be monitored by using another temperature sensor even when an abnormal state (e.g., malfunction) occurs in some temperature sensors. In addition, because a plurality of temperature sensors disposed at a specific position of the battery module 340 are implemented with different attributes, the temperature of the battery module 340 at the position can be monitored by using another temperature sensor having a different attribute even in various external environments and/or contexts that affect temperature sensors of a specific attribute.

In embodiments, a microcontroller unit (e.g., the microcontroller unit 415 of FIG. 5) connected respectively to the first analog front end 413a and the second analog front end 413b may acquire (or receive) a first digital signal related to the first temperature sensor 11 and a second digital signal related to the second temperature sensor 13 from the first analog front end 413a and may acquire a third digital signal related to the third temperature sensor 21 and a fourth digital signal related to the fourth temperature sensor 23 from the second analog front end 413b. According to embodiments, the microcontroller unit 415 may determine overheating of the battery module 340 by monitoring at least one of the first digital signal, the second digital signal, the third digital signal, or the fourth digital signal. For example, when the microcontroller unit 415 determines that at least one temperature value indicated respectively by the first digital signal, the second digital signal, the third digital signal, and the fourth digital signal is greater than a predetermined threshold, the microcontroller unit 415 may determine that overheating of the battery module 340 will occur at the position where the temperature sensor related to the temperature value is disposed.

According to embodiments, in the process of determining whether the battery module 340 is overheated, the microcontroller unit 415 may verify reliabilities of the first digital signal and the second digital signal received from the first analog front end 413a. In this regard, the microcontroller unit 415 may calculate an absolute value of a difference between a first temperature value indicated by the first digital signal and a second temperature value indicated by the second digital signal. The microcontroller unit 415 may also calculate a sum of a first tolerance value defined for the first temperature sensor 11 (e.g., a difference between an actual external-temperature value and the first temperature value indicated by the first digital signal) and a second tolerance value defined for the second temperature sensor 13 (e.g., a difference between an actual external-temperature value and the second temperature value indicated by the second digital signal). In embodiments, when the calculated absolute value is less than or equal to the sum, the microcontroller unit 415 may determine that the reliabilities of the first digital signal and the second digital signal received from the first analog front end 413a are satisfied and may use the first digital signal and the second digital signal in the process of determining whether the battery module 340 is overheated. Alternatively, when the calculated absolute value is greater than the sum, the microcontroller unit 415 may determine that the reliabilities of the first digital signal or the second digital signal received from the first analog front end 413a are not satisfied. In this case, the microcontroller unit 415 may exclude the first digital signal and the second digital signal from the process of determining whether the battery module 340 is overheated and may provide (or transmit) information (or a warning signal) notifying an abnormal state of the temperature sensor related to the digital signal indicating a relatively large temperature value to the battery-management master module (e.g., the battery-management master module 420 of FIGS. 5 and 6). Similarly, in the process of determining whether the battery module 340 is overheated, the microcontroller unit 415 may verify reliabilities of the third digital signal and the fourth digital signal received from the second analog front end 413b, use the third digital signal and the fourth digital signal in the process, or exclude them.

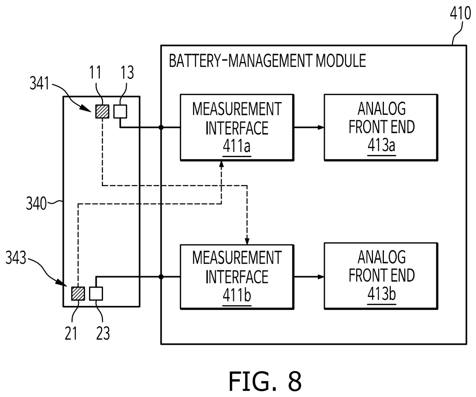

FIG. 8 illustrates another example of connections between a plurality of temperature sensors of a battery module and a plurality of analog front ends of a battery-management module according to embodiments of the present invention.

In the embodiment of FIG. 8, descriptions of the same or similar configurations as those of the embodiment of FIG. 7 may be omitted to avoid redundancy.

Referring to FIG. 8, the battery module 340 may include a first set of temperature sensors 11 and 13 disposed at a first position 341 of the battery module 340, which is constituted by a combination of a first temperature sensor 11 of a first attribute and a second temperature sensor 13 of a second attribute. The battery module 340 may also include a second set of temperature sensors 21 and 23 disposed at a second position 343 of the battery module 340, which is constituted by a combination of a third temperature sensor 21 of a third attribute (or the first attribute) and a fourth temperature sensor 23 of a fourth attribute (or the second attribute).

In embodiments, the first temperature sensor 11 and the second temperature sensor 13 constituting the first set of temperature sensors 11 and 13 may be respectively connected to different analog front ends of the battery-management module 410. For example, the second temperature sensor 13 of the second attribute may be connected to the first analog front end 413a through the first measurement interface 411a, and the first temperature sensor 11 of the first attribute may be connected to the second analog front end 413b through the second measurement interface 411b. Likewise, the third temperature sensor 21 and the fourth temperature sensor 23 constituting the second set of temperature sensors 21 and 23 may be respectively connected to different analog front ends of the battery-management module 410. For example, the fourth temperature sensor 23 of the fourth attribute (or the second attribute) may be connected to the second analog front end 413b through the second measurement interface 411b, and the third temperature sensor 21 of the third attribute (or the first attribute) may be connected to the first analog front end 413a through the first measurement interface 411a.

According to the embodiment of FIG. 8, because each of the plurality of temperature sensors disposed at a specific position of the battery module 340 is connected to different analog front ends of the battery-management module 410, the temperature of the battery module 340 at the position can be monitored by using another analog front end even when an abnormal state (e.g., malfunction) occurs in some analog front ends.

In embodiments, a microcontroller unit (e.g., the microcontroller unit 415 of FIG. 5) connected respectively to the first analog front end 413a and the second analog front end 413b may acquire a second digital signal related to the second temperature sensor 13 and a third digital signal related to the third temperature sensor 21 from the first analog front end 413a and may acquire a fourth digital signal related to the fourth temperature sensor 23 and a first digital signal related to the first temperature sensor 11 from the second analog front end 413b. According to embodiments, the microcontroller unit 415 may determine overheating of the battery module 340 by monitoring at least one of the first digital signal, the second digital signal, the third digital signal, or the fourth digital signal. For example, when the microcontroller unit 415 determines that at least one temperature value indicated respectively by the first digital signal, the second digital signal, the third digital signal, and the fourth digital signal is greater than a predetermined threshold, the microcontroller unit 415 may determine that overheating of the battery module 340 will occur at the position where the temperature sensor related to the temperature value is disposed.

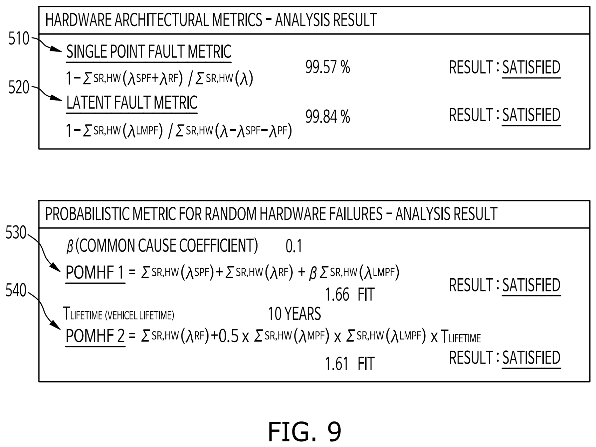

FIG. 9 illustrates, by way of example, safety-assessment results of a vehicle based on a battery management system according to embodiments of the present invention.

Referring to FIG. 9, a battery management system according to embodiments may stably monitor a temperature of a battery module (or a battery pack) based on the structure in which a temperature-sensor set disposed at a specific position of the battery module, a plurality of temperature sensors having different attributes constituting the temperature-sensor set, and/or a plurality of temperature sensors constituting the temperature-sensor set are connected to different analog front ends, as described with reference to the embodiment of FIG. 7 and/or FIG. 8. Therefore, the battery management system may satisfy an ASIL-D grade defined in ISO 26262. For example, the battery management system may satisfy SPFM (single-point fault metric) 510, which is an assessment item for ASIL-D, by at least a reference value (e.g., 99 percent) and may satisfy LFM (latent-fault metric) 520 by at least a reference value (e.g., 90 percent). In addition, the battery management system may satisfy PMHF (probabilistic metric for hardware failure) 530 and/or 540, which is an assessment item for ASIL-D, herein a reference value (e.g., 10 FIT).

Although the present invention has been described with reference to embodiments and drawings illustrating aspects thereof, the present invention is not limited thereto. Various modifications and variations can be made by those skilled in the art within the scope of the technical spirit of the present invention and the claims and equivalents thereof.

## Claims

1. A battery management system (400) comprising:
a battery pack (300) comprising a plurality of battery modules (340); and
a plurality of battery-management modules (410) respectively corresponding to the plurality of battery modules (340),
wherein each of the plurality of battery modules (340) comprises:
a first set of temperature sensors (11, 13) disposed at a first position (341) of the battery module (340); and
a second set of temperature sensors (21, 23) disposed at a second position (343) of the battery module (340) different from the first position (341), and
wherein each of the plurality of battery-management modules (410) comprises:
a first analog front end (413a) connected to at least one temperature sensor (11, 13) of the first set of temperature sensors (11, 13); and
a second analog front end (413b) connected to at least one temperature sensor (21, 23) of the second set of temperature sensors (21, 23).

2. The battery management system (400) according to claim 1,
wherein the first set of temperature sensors (11, 13) comprises a first temperature sensor (11) and a second temperature sensor (13),
the second set of temperature sensors (21, 23) comprises a third temperature sensor (21) and a fourth temperature sensor (23),
the first analog front end (413a) is connected to the first temperature sensor (11) and the second temperature sensor (13),
the second analog front end (413b) is connected to the third temperature sensor (21) and the fourth temperature sensor (23),
the first temperature sensor (11) and the third temperature sensor (21) comprise a first attribute,
the second temperature sensor (12) and the fourth temperature sensor (22) comprise a second attribute different from the first attribute, and
each of the plurality of battery-management modules (410) further comprises a microcontroller unit (415) connected to the first analog front end (413a) and the second analog front end (413b).

3. The battery management system (400) according to claim 2,
wherein the microcontroller unit (415) is configured to:
acquire a first signal related to the first temperature sensor (11) and a second signal related to the second temperature sensor (13) from the first analog front end (413a);
acquire a third signal related to the third temperature sensor (21) and a fourth signal related to the fourth temperature sensor (23) from the second analog front end (413b); and
determine overheating of a battery module (340) based on at least one of the first signal, the second signal, the third signal, or the fourth signal.

4. The battery management system (400) according to claim 3,
further comprising a battery-management master module (420) connected to the plurality of battery-management modules (410),
wherein the microcontroller unit (415) is configured to provide information related to an abnormal state of the battery module (340) to the battery-management master module (420) based on a determination that a temperature value indicated by at least one of the first signal, the second signal, the third signal, or the fourth signal is greater than a predetermined threshold.

5. The battery management system (400) according to claim 3,
wherein the microcontroller unit (415) is configured to:
calculate an absolute value of a difference between a first temperature value indicated by the first signal and a second temperature value indicated by the second signal;
calculate a sum of a first tolerance value of the first temperature sensor (11) and a second tolerance value of the second temperature sensor (13); and
determine that the absolute value is less than or equal to the sum, based on which the microcontroller unit (415) is configured to use the first signal and the second signal to assess overheating of the battery module (340).

6. The battery management system (400) according to claim 5,
further comprising a battery-management master module (420) connected to the plurality of battery-management modules (410),
wherein the microcontroller unit (415) is configured to provide information related to an abnormal state of either the first temperature sensor (11) or the second temperature sensor (13), corresponding to a greater temperature value among the first temperature value and the second temperature value, to the battery-management master module (420), based on a determination that the absolute value is greater than the sum value.

7. The battery management system (400) according to claim 3,
wherein the microcontroller unit (415) is configured to:
calculate an absolute value of a difference between a third temperature value indicated by the third signal and a fourth temperature value indicated by the fourth signal;
calculate a sum of a third tolerance value of the third temperature sensor (21) and a fourth tolerance value of the fourth temperature sensor (23); and
determine that the absolute value is less than or equal to the sum, based on which the microcontroller unit (415) is configured to use the third signal and the fourth signal to assess overheating of the battery module (340).

8. The battery management system (400) according to claim 7,
further comprising a battery-management master module (420) connected to the plurality of battery-management modules (410),
wherein the microcontroller unit (415) is configured to provide information related to an abnormal state of either the third temperature sensor (21) or the fourth temperature sensor (23), corresponding to a greater temperature value among the third temperature value and the fourth temperature value, to the battery-management master module (420), based on a determination that the absolute value is greater than the sum value.

9. The battery management system (400) according to any one of the preceding claims,
wherein the first set of temperature sensors (11, 13) comprises a first temperature sensor (11) and a second temperature sensor (13),
the second set of temperature sensors (21, 23) comprises a third temperature sensor (21) and a fourth temperature sensor (23),
the first analog front end (413a) is connected to the second temperature sensor (13) and the third temperature sensor (21),
the second analog front end (413b) is connected to the first temperature sensor (11) and the fourth temperature sensor (23),
the first temperature sensor (11) and the third temperature sensor (21) comprise a first attribute,
the second temperature sensor (13) and the fourth temperature (23) sensor comprise a second attribute different from the first attribute, and
each of the plurality of battery-management modules (410) further comprises a microcontroller unit (415) connected to the first analog front end (413a) and the second analog front end (413b).

10. The battery management system (400) according to claim 9,
wherein the microcontroller unit (415) is configured to:
acquire a second signal related to the second temperature sensor (13) and a third signal related to the third temperature sensor (21) from the first analog front end (413a);
acquire a first signal related to the first temperature sensor (11) and a fourth signal related to the fourth temperature sensor (23) from the second analog front end (413b); and
determine overheating of a battery module (340) based on at least one of the first signal, the second signal, the third signal, or the fourth signal.

11. The battery management system (400) according to claim 10,
further comprising a battery-management master module (420) connected to the plurality of battery-management modules (410),
wherein the microcontroller unit (415) is configured to provide information related to an abnormal state of the battery module (340) to the battery-management master module (420) based on a determination that a temperature value indicated by at least one of the first signal, the second signal, the third signal, or the fourth signal is greater than a predetermined threshold.

12. A battery pack (300) comprising a plurality of battery modules (340), wherein each of the plurality of battery modules (340) comprises:
a first set of temperature sensors (11, 13) disposed at a first position (341) of the battery module (340); and
a second set of temperature sensors (21, 23) disposed at a second position (343) of the battery module (340) different from the first position (341),
wherein at least one temperature sensor (11, 13) of the first set of temperature sensors (11, 13) forms a signal path with a first analog front end (413a) disposed outside the battery pack (300), and
wherein at least one temperature sensor (21, 23) of the second set of temperature sensors (21, 23) forms a signal path with a second analog front end (413b) disposed outside the battery pack (300).

13. The battery pack (300) according to claim 12,
wherein the first set of temperature sensors (11, 13) comprises a first temperature sensor (11) that forms a first signal path with the first analog front end (413a) and a second temperature sensor (13) that forms a second signal path with the first analog front end (413a), and
the second set of temperature sensors (21, 23) comprises a third temperature sensor (21) that forms a third signal path with the second analog front end (413b) and a fourth temperature sensor (23) that forms a fourth signal path with the second analog front end (413b).

14. The battery pack (300) according to claim 12,
wherein the first set of temperature sensors (11, 13) comprises a first temperature sensor (11) that forms a first signal path with the second analog front end (413b) and a second temperature sensor (13) that forms a second signal path with the first analog front end (413a), and
the second set of temperature sensors (21, 23) comprises a third temperature sensor (21) that forms a third signal path with the first analog front end (413a) and a fourth temperature sensor (23) that forms a fourth signal path with the second analog front end (413b).

15. The battery pack (300) according to claim 13 or 14,
wherein the first temperature sensor (11) and the third temperature sensor (21) comprise a first attribute, and
the second temperature sensor (13) and the fourth temperature sensor (23) comprise a second attribute different from the first attribute.
